(19) Europäisches Patentamt
European Patent Office
Office européen des brevets

(11) **EP 2 982 901 A1**

(12) **EUROPEAN PATENT APPLICATION**
published in accordance with Art. 153(4) EPC

(43) Date of publication:
**10.02.2016 Bulletin 2016/06**

(51) Int Cl.:
*F21S 8/08* (2006.01)     *H05B 37/02* (2006.01)
*F21W 131/103* (2006.01)

(21) Application number: **14779127.1**

(22) Date of filing: **20.03.2014**

(86) International application number:
**PCT/JP2014/001638**

(87) International publication number:
**WO 2014/162681 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.04.2013 JP 2013078008**

(71) Applicant: **Koito Manufacturing Co., Ltd. Tokyo 108-8711 (JP)**

(72) Inventor: **KOBAYASHI, Shoji Shizuoka-shi Shizuoka 424-8764 (JP)**

(74) Representative: **Algemeen Octrooi- en Merkenbureau B.V. P.O. Box 645 5600 AP Eindhoven (NL)**

(54) **ROAD LIGHTING DEVICE**

(57)     In a road lighting device capable of illuminating a road and a sidewalk, the main optical axis of a lamp unit is directed toward the traveling direction of a traffic lane on the road lighting device side. The lamp unit is set so that the maximum luminous intensity of emission light is obtained in the range of 10 to 30 degrees downward from the horizontal line. An information acquisition unit may acquire information indicating whether or not a pedestrian's improper crossing is likely to occur in the situation, which is judged based on information correlated with the traffic situation around the place where the road lighting device is installed. A light distribution control unit may control light distribution of the lamp unit based on information acquired by the information acquisition unit.

**FIG.3**

**Description**

[TECHNICAL FIELD]

The present invention relates to a technique for controlling light distribution in road lighting for enabling illumination of a road and a sidewalk.

[BACKGROUND ART]

Road lighting or street lighting has been conventionally provided in some places so as to improve forward visibility from vehicles traveling on the road at night. In order to appropriately control such road lighting according to the traveling state of a vehicle, there has been devised a road lighting control device that determines whether or not to illuminate a sidewalk more brightly than normal, based on information acquired by a vehicle traveling around the place where a lighting unit is installed. When it is determined that the sidewalk should be illuminated more brightly, the road lighting control device controls the light distribution of the lighting unit so as to make the sidewalk brighter than normal (see Patent Document 1).

[PRIOR ART REFERENCE]

[PATENT DOCUMENT]

[Patent Document 1] Japanese Patent Application Laid-open No. 2012-52527

[DISCLOSURE OF INVENTION]

[PROBLEM(S) TO BE SOLVED BY THE INVENTION]

Meanwhile, many accidents have occurred in recent years involving pedestrians who improperly cross intersections or highways in urban areas, requiring investigation of the causes and measures against such accidents. As a result of intensive study of this problem, the present inventor has found that, depending on the light distribution of road lighting, a difference occurs in visibility of a pedestrian improperly crossing a road, from a traveling vehicle.
The present invention has been made in view of such a situation, and a purpose thereof is to provide a technique for ensuring visibility of an object on a road, such as a pedestrian improperly crossing a road.

[MEANS TO SOLVE THE PROBLEM(S)]

To solve the problem above, a road lighting device according to an embodiment of the present invention is capable of illuminating a road and a sidewalk, and the road lighting device comprises a lamp unit of which the main optical axis is directed toward the traveling direction of a traffic lane on the road lighting device side. The lamp unit is set so that the maximum luminous intensity of emission light is obtained in the range of 10 to 30 degrees downward from the horizontal line.
According to the embodiment, since light is emitted from the road lighting device toward the traveling direction of the traveling lane, the driver of a traveling vehicle views an object on the road as a reverse silhouette vision. Therefore, favorable visibility of the object is ensured.
The road lighting device may further comprise: an information acquisition unit that acquires information indicating whether or not a pedestrian's improper crossing is likely to occur in the situation, which is judged based on information correlated with the traffic situation around the place where the road lighting device is installed; and a light distribution control unit that controls light distribution of the lamp unit based on information acquired by the information acquisition unit. The light distribution control unit may control the lighting state or the illumination direction of the lamp unit. Accordingly, in a situation where improper crossing is likely to occur, the driver of a vehicle can recognize more easily a pedestrian improperly crossing the road.
The lamp unit may be configured to provide a trapezoidal light distribution corresponding to the road shape toward the traveling direction. Accordingly, a road can be equally illuminated toward the traveling direction.
The lamp unit may include a rear visible portion that emits light toward a direction opposite to the traveling direction so that the driver of a vehicle approaching the road lighting device can visually recognize the rear visible portion. Accordingly, the driver of a vehicle can recognize the positions of the road lighting devices placed along a road and can also recognize the road shape in the traveling direction more easily.
The lamp unit may be configured so that the road surface luminance is 0.5 cd/m$^2$ or greater at a position 20 meters ahead of the place where the road lighting device is installed in the traveling direction. Accordingly, the road lighting device can brightly illuminate a farther point on the road in the traveling direction.

Optional combinations of the aforementioned constituting elements, and implementations of the present invention in the form of methods, apparatuses, or systems may also be practiced as additional modes of the present invention.

[ADVANTAGEOUS EFFECTS OF INVENTION]

The present invention ensures visibility of an object on a road, such as a pedestrian who improperly crosses a road.

[BRIEF DESCRIPTION OF DRAWINGS]

Embodiments will now be described, by way of example only, with reference to the accompanying drawings which are meant to be exemplary, not limiting, and wherein like elements are numbered alike in several Figures, in which:

Fig. 1A is a diagram that schematically shows a light distribution of a general road lighting device installed on a road viewed from the above, and Fig. 1B is a diagram that schematically shows a light distribution of the general road lighting device installed on the road viewed toward the traveling direction of a vehicle;

Fig. 2 is a schematic diagram used to describe a state where the visibility of a pedestrian from a vehicle is different depending on the position of the pedestrian with respect to the road lighting device;

Fig. 3 is a diagram that schematically shows light distributions of road lighting devices according to the present embodiment;

Fig. 4 is a diagram that shows road surface luminance distribution of a road on which the road lighting devices according to the present embodiment are installed;

Fig. 5A is a schematic diagram that shows illumination ranges of conventional road lighting devices placed in the vicinity of a crosswalk, and Fig. 5B is a schematic diagram that shows illumination ranges of the road lighting devices according to the present embodiment illuminating the vicinity of a crosswalk;

Fig. 6 is a schematic diagram that shows illumination ranges of the road lighting devices according to the present embodiment illuminating the vicinity of an intersection and a basic road extending from the intersection;

Fig. 7A is a schematic diagram used to describe inhibition of glare in a basic road section, Fig. 7B is a schematic diagram used to describe inhibition of glare at an intersection, and Fig. 7C is a schematic diagram used to describe inhibition of glare by changing the illumination direction of a road lighting device;

Fig. 8 is a schematic diagram used to describe a mechanism for causing improper crossing on a two-lane road;

Fig. 9A is a diagram that shows an installation example of a traffic situation monitoring device, and Fig. 9B is a diagram that shows an example of an image used for measurement of vehicle speed and traffic volume on a road;

Fig. 10A is a diagram that schematically shows light distributions in an off-peak mode, Fig. 10B is a diagram that schematically shows light distributions in a heavy traffic mode, and Fig. 10C is a diagram that schematically shows light distributions in a traffic congestion mode;

Fig. 11 is a block diagram that shows a schematic configuration of a road lighting control system according to the present embodiment;

Fig. 12A is a diagram that shows a schematic configuration of a lamp unit, and Fig. 12B is a diagram that shows a schematic configuration of a projector lamp;

Fig. 13 is a flowchart that shows a method for controlling a road lighting device system according to the present embodiment;

Fig. 14 is a diagram that shows a light distribution of a road lighting device according to the present embodiment, on a vertical cross section including the traveling direction of a vehicle;

Fig. 15 is a diagram that shows road surface luminance distribution viewed, toward the traveling direction of a vehicle, from the position of a monitoring camera provided at the top (eight meters above the ground) of a road lighting device according to the present embodiment;

Fig. 16 is a diagram that schematically shows the luminance distribution on the road surface illuminated by the road lighting device according to the present embodiment shown in Fig. 15;

Figs. 17A and 17B are schematic sectional views of focused beam optical systems producing a light distribution pattern A, and Fig. 17C is a schematic sectional view of a diffused beam optical system producing light distribution patterns B and C;

Fig. 18A is a schematic sectional view of an optical system producing a cutoff line, and Fig. 18B is a front view of the optical system shown in Fig. 18A;

Fig. 19 is a schematic sectional view of an optical system constituting the lamp shown in Fig. 12B;

Fig. 20A is a schematic diagram that shows correspondence relationships between a matrix LED and illumination areas, and Fig. 20B is a schematic configuration diagram of the main part of a projector optical system viewed from a side; and

Fig. 21 is a schematic sectional view of an exemplary optical system according to a modification of the present embodiment.

[MODE FOR CARRYING OUT THE INVENTION]

First, the background of the subject invention proposed by the present inventor will be described. In recent years, an increasing number of accidents between pedestrians and vehicles on highways in urban areas have become a problem. Particularly, accidents involving pedestrians who improperly cross basic roads are increasing. Such highways have street lighting or road lighting in some places, but, because of the problem of energy consumption or the like, it is a fact that lighting devices sufficient to brightly illuminate the entire length of the highway cannot be installed.

As a result, only the vicinity of lighting is brightly illuminated on a road in a section in which road lighting is provided in places, such as an intersection. A change of the lighting environment in such a moving space also leads to a change in visibility of a pedestrian, which may further cause an accident due to omission of a driver. Such an accident involving a pedestrian is likely to occur on a highway adjacent to a living area (dense residential area) or a public facility (school, hospital, and the like).

With regard to such a problem, the present inventor has conceived that it is most important to check the behavior of a pedestrian on a sidewalk, such as a pedestrian waiting to cross the road, and hence, roads or sidewalks, including road shoulders, should be illuminated by actively utilizing the existing road lighting illuminating obstacles on the roads (or illuminating the roads). Namely, a technique for improving visibility of a pedestrian waiting to cross the road on a sidewalk or improperly crossing the road may be realized by using road lighting.

For such a technique, it is important to judge the situation where a pedestrian improperly crosses the road.

For example, the probability of occurrence of improper crossing may be determined based on an image of a road captured by a monitoring camera, so as to control the light distribution of a road lighting device based on the determination result. Also, the light distribution of road lighting itself may be devised to allow, even if there is a pedestrian improperly crossing a road, a driver of a traveling vehicle to visually recognize the pedestrian easily.

Hereinafter, the best mode for carrying out the present invention will be described in detail with reference to the drawings. In the drawings, like reference characters designate like or corresponding elements, and the description thereof will not be repeated for brevity.

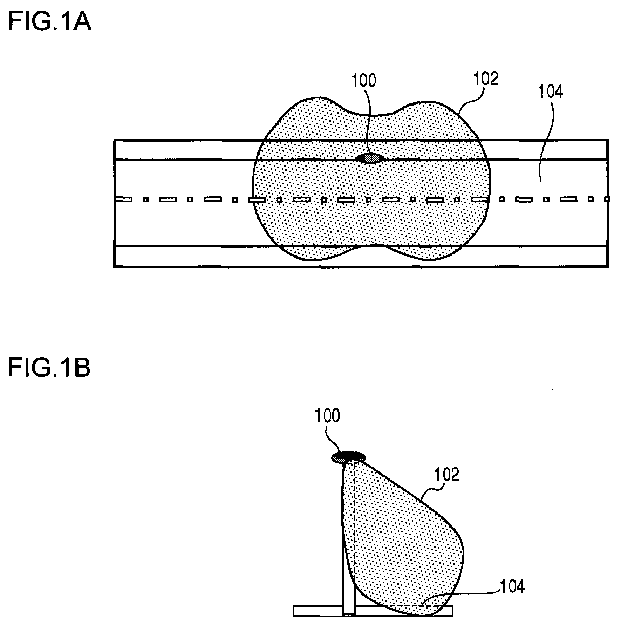

Firstly, light distribution of a general road lighting device will be described. Fig. 1A is a diagram that schematically shows a light distribution of a general road lighting device installed on a road viewed from the above, and Fig. 1B is a diagram that schematically shows a light distribution of the general road lighting device installed on the road viewed toward the traveling direction of a vehicle.

As shown in Fig. 1A, an illumination range 102 of a general road lighting device 100 is symmetric in the traveling direction of a road 104, with the position of the road lighting device 100 as the center. Namely, viewed from a traveling vehicle, the light distribution on the front side and that on the back side of the road lighting device 100 are axisymmetric with each other. Also, in order to brightly illuminate the road surface of the traffic lane on the road lighting device side, the main optical axis of the road lighting device 100 is directed toward the traffic lane rather than right downward, as shown in Fig. 1B.

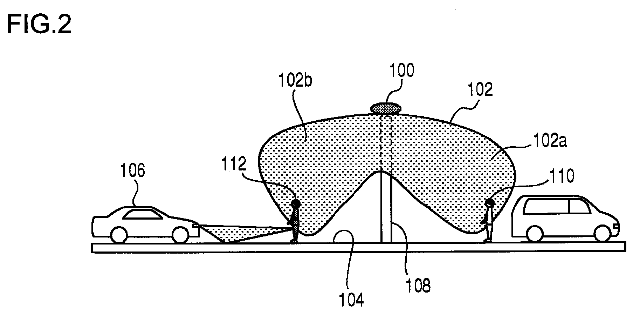

For a vehicle traveling on a road provided with such a general road lighting device 100, the right distribution as shown in Fig. 1A may sometimes be a problem. Fig. 2 is a schematic diagram used to describe a state where the visibility of a pedestrian from a vehicle is different depending on the position of the pedestrian with respect to the road lighting device.

When a pedestrian 110 is present within an illumination range 102a, which is farther than a pole 108 of the road lighting device 100 viewed from a vehicle 106, as shown in Fig. 2, the driver of the vehicle 106 can recognize the pedestrian as a reverse silhouette vision, obtaining favorable visibility of the pedestrian 110. On the other hand, when a pedestrian 112 is present within an illumination range 102b, which is closer than the pole 108, the driver of the vehicle 106 recognizes the pedestrian as a silhouette vision, so that the pedestrian is hard to detect. In this way, with the general road lighting device 100, a visual object, such as a pedestrian and an object on the road, may be viewed as a silhouette vision or as a reverse silhouette vision. Accordingly, a driver has to drive while paying attention to such a change of vision, which may cause visual fatigue of the driver.

(Road lighting device)

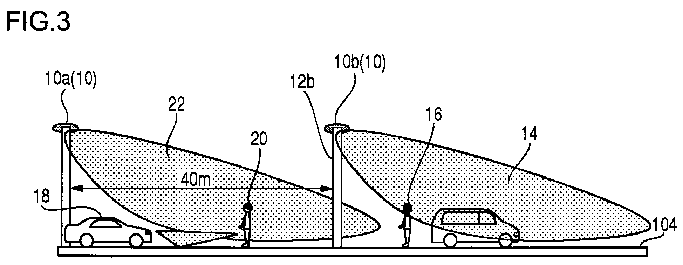

Based on the aforementioned findings, a road lighting device for improving visibility of an object on a road, such as a pedestrian and a fallen object, will now be described. Fig. 3 is a diagram that schematically shows light distributions of road lighting devices according to the present embodiment.

As shown in Fig. 3, road lighting devices 10a and 10b (hereinafter, also referred to as "road lighting devices 10", as needed) are arranged on a side of the road with a distance of about 40 meters therebetween so as to illuminate the road and sidewalk. Each of the road lighting devices 10 comprises a lamp unit (detailed later) of which the main optical axis is directed toward the traveling direction of the traffic lane on the road lighting device side. The lamp unit is set so that the maximum luminous intensity of emission light is obtained in the range of 10 to 30 degrees downward from the horizontal line.

When a pedestrian 16 is present within an illumination range 14, which is farther than a pole 12b of the road lighting device 10b viewed from a vehicle 18, the driver of the vehicle 18 can recognize the pedestrian as a reverse silhouette vision, obtaining favorable visibility of the pedestrian 16. Also, when a pedestrian 20 is present closer than the pole 12b and within an illumination range 22 of the road lighting device 10a, which is not within the illumination range 14 of the road lighting device 10b, the driver of the vehicle 18 can also recognize the pedestrian 20 as a reverse silhouette vision, obtaining favorable visibility of the pedestrian 20, too.

With the road lighting devices 10 configured as described above, since light is emitted from the road lighting devices toward the traveling direction of the traveling lane, the driver of the traveling vehicle 18 always views an object (a pedestrian or a fallen object) on the road as a reverse silhouette vision. Accordingly, an object on the road is stably viewed, so that favorable visibility of the object is ensured. The illumination range 22 of the road lighting device 10a is set so that the road lighting device 10a also illuminates the vicinity of the area where the road lighting device 10b, which is arranged next to the road lighting device 10a in the traveling direction of the lane, is installed (the pole 12b). Such light distribution is achieved by setting the lamp unit of each road lighting device 10 so that the position where the maximum luminous intensity of emission light is obtained is in the range of 10 to 30 degrees downward from the horizontal line, when the distance between the road lighting devices is 40 meters.

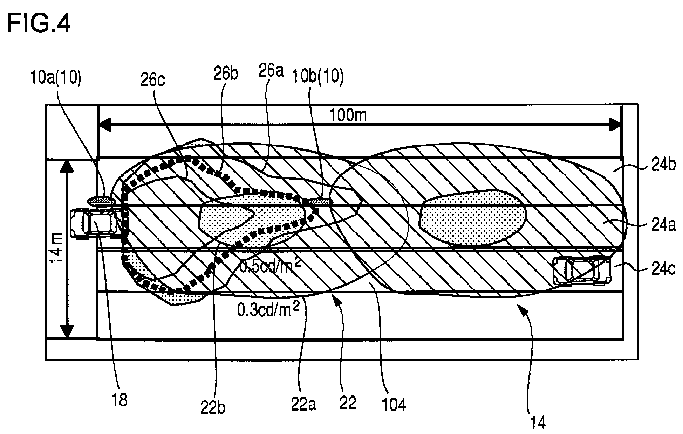

Fig. 4 is a diagram that shows road surface luminance distribution of a road on which the road lighting devices according to the present embodiment are installed. In the drawing, like reference characters designate like constituting elements in Fig. 3, and the description thereof will be appropriately omitted. Each of the road lighting devices 10 is configured to illuminate the road surface in the range between a sidewalk 24b and an opposite traffic lane 24c, centering on a traffic lane 24a on the road lighting device 10 side. The road surface luminance provided by each road lighting device 10 is 0.3 cd/m$^2$ or greater within an outer illumination range 22a and 0.5 cd/m$^2$ or greater within an inner illumination range 22b, which are set lower than the road surface luminance provided by a conventional road lighting device. Since the visibility of a reverse silhouette vision is greater than that of a silhouette vision, sufficient visibility can be obtained even when lower road surface luminance is set.

Fig. 4 also shows road surface luminance distribution when only the headlights of the vehicle 18 illuminate the road surface with low beam light distribution. The road surface luminance in the case is 0.3 cd/m$^2$ or greater within an outer range 26a, 0.5 cd/m$^2$ or greater within an inner range 26b, and 1.0 cd/m$^2$ or greater within a further inner range 26c. As shown in Fig. 4, the position of the maximum road surface luminance provided by the road lighting device 10a according to the present embodiment is set to be ahead of the position of the maximum road surface luminance provided by the low beam light distribution of the headlights, which is 10 to 15 meters ahead of the vehicle. Such a light distribution of the road lighting device 10 can improve the visibility of an object on the road when both the road lighting device 10 and the headlights of the vehicle 18 are used.

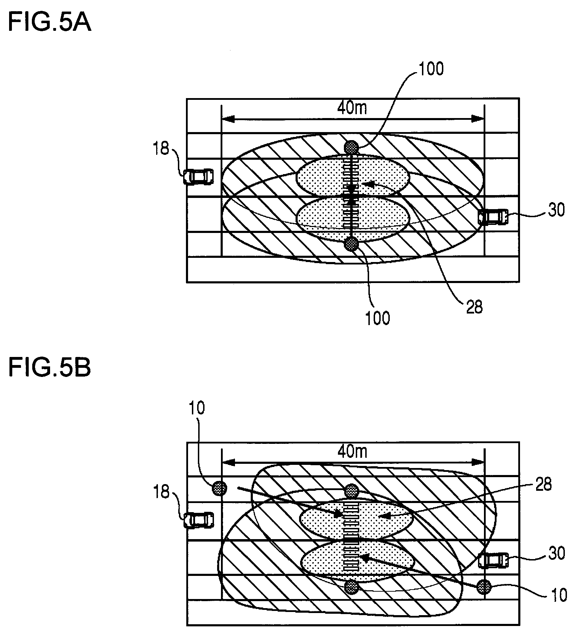

There will now be described the case where the road lighting devices according to the present embodiment are placed in the vicinity of a crosswalk. Fig. 5A is a schematic diagram that shows illumination ranges of conventional road lighting devices placed in the vicinity of a crosswalk, and Fig. 5B is a schematic diagram that shows illumination ranges of the road lighting devices according to the present embodiment illuminating the vicinity of a crosswalk.

As shown in Fig. 5A, conventional road lighting devices 100 are placed at the both ends of a crosswalk 28, and the main optical axis of each of the road lighting devices 100 is directed toward the crosswalk 28. In this case, since a side of a pedestrian present on the crosswalk is not illuminated, the visibility from the driver of a vehicle 18 or a vehicle 30 is not necessarily favorable. Particularly, a pedestrian present (improperly crossing) between the vehicle 18 or vehicle 30 and a road lighting device 100 is hard to detect, as mentioned previously.

On the other hand, since the road lighting devices 10 according to the present embodiment brightly illuminate a side of a pedestrian, as shown in Fig. 5B, the visibility from the driver of the vehicle 18 or vehicle 30 is greatly superior. In addition, the visibility of a pedestrian present (improperly crossing) between the vehicle 18 or vehicle 30 and a road lighting device 10 is also improved.

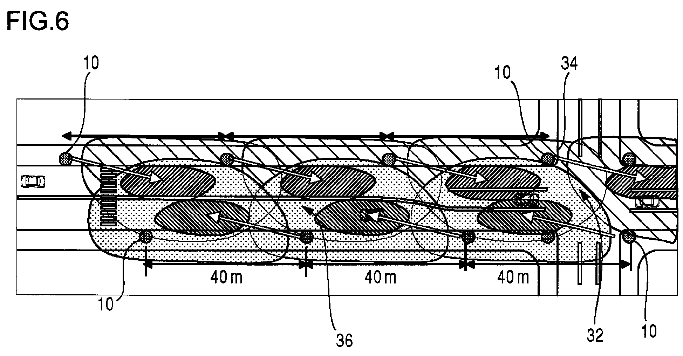

There will now be described the case where the road lighting devices according to the present embodiment are placed in the vicinity of an intersection. Fig. 6 is a schematic diagram that shows illumination ranges of the road lighting devices according to the present embodiment illuminating the vicinity of an intersection and a basic road extending from the intersection.

As shown in Fig. 6, the road lighting devices 10 are placed at corner cut sections 34 of an intersection 32. In a basic road section 36, the road lighting devices 10 are staggered on the both sides of the road. A road lighting device 10 placed at a corner cut section 34 illuminates a crosswalk and the traveling lane on the facing side at the intersection. In the same way, the main optical axes of the lighting devices placed at the other corner cut sections of the intersection 32 are also set to illuminate the directions indicated by the arrows. Accordingly, a side of a pedestrian can be illuminated, so that a driver can visually recognize the presence and, in addition, the moving state of the pedestrian. Further, since the traveling lane ahead of the intersection 32 is also illuminated, the presence of a pedestrian or a bicycle improperly crossing in the vicinity of the intersection can be detected more easily.

In the basic road section 36, the road lighting devices 10 on the traveling lane side are placed to illuminate the same direction as the illumination direction of vehicles' headlights. Accordingly, for a driver of a traveling vehicle, a change in vision, such as a change from a silhouette vision to a reverse silhouette vision or from a reverse silhouette vision to a silhouette vision, of a pedestrian or an obstacle on the road does not occur, and the uniformity of the road surface luminance is also improved, thereby providing comfortable driving to the driver.

(Anti-glare measures)

When the road surface luminance provided by a road lighting device 10 is about 0.3 cd/m$^2$, glare is not a serious problem to a driver. However, in an accident-prone area, it may be required to illuminate the road more brightly. Also, at a large intersection or on a road with many traffic lanes, glare may occur in a partial area when a farther point is to be brightly illuminated. Therefore, in such situations, it is desirable to detect a vehicle using a monitoring camera placed at the intersection or on the road so as to cut or suppress glare light toward the vehicle.

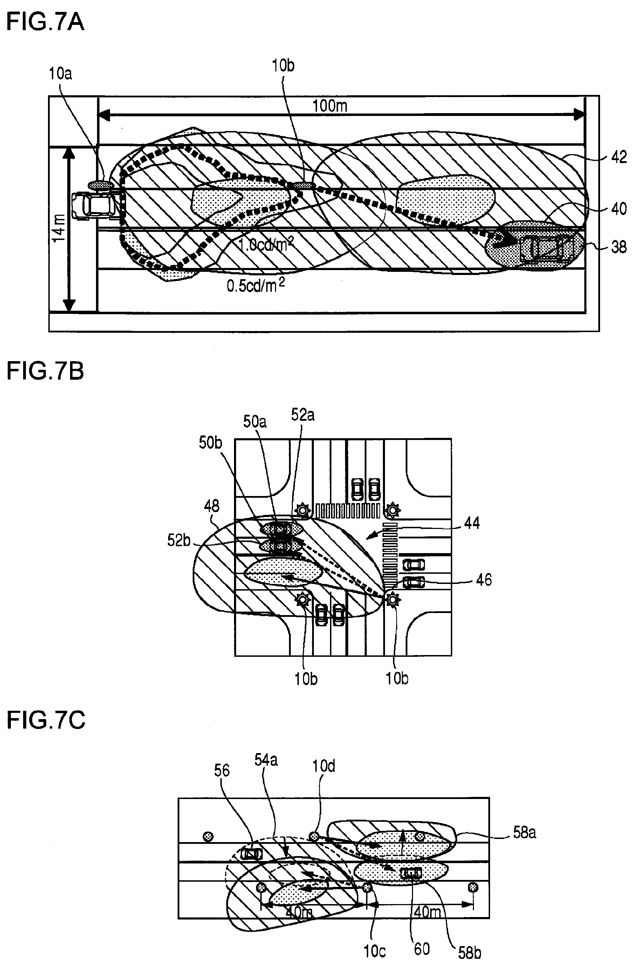

Fig. 7A is a schematic diagram used to describe inhibition of glare in a basic road section, Fig. 7B is a schematic diagram used to describe inhibition of glare at an intersection, and Fig. 7C is a schematic diagram used to describe inhibition of glare by changing the illumination direction of a road lighting device.

In glare inhibition control in the situations shown in Figs. 7A and 7B, the position of an oncoming vehicle is precisely measured first. The position of a vehicle is measured, for example, by using a monitoring camera installed on a road or using a road-vehicle communication device linked to a car navigation system mounted on the vehicle. The road-vehicle communication device transmits position information of a vehicle measured by a GPS of a car navigation system mounted on the vehicle, to a road lighting control device directly or via another device. A road lighting device 10 is then controlled so as to partially shield or reduce light toward the position of the oncoming vehicle, accordingly.

When the position of a vehicle is measured using a camera, the glare inhibition control can be conducted most precisely if cameras are provided for the respective road lighting devices, but the cost of the whole system will be increased instead. Accordingly, it is desirable to control multiple road lighting devices using a single camera.

For example, in the case of the situation shown in Fig. 7A, a camera is installed only for the road lighting device 10a of the road lighting devices 10a and 10b. Information obtained by the camera installed for the road lighting device 10a is used by an image processing device provided in a road lighting control device or the like to compute position information of an approaching vehicle 38. Based on the position information, the light distributions of the road lighting devices 10a and 10b are controlled. In Fig. 7A, the light distribution of the road lighting device 10b is controlled to form a light shielded area 40 so as not to provide glare to the approaching vehicle 38 on the opposite traffic lane included in an illumination range 42 of the road lighting device 10b.

In the case of the situation shown in Fig. 7B, a monitoring camera is installed at a corner cut section 46 of an intersection 44, for example, so that the light distributions of the road lighting devices 10a and 10b are controlled based on information obtained by the camera. If the multiple road lighting devices 10a and 10 can be controlled using information obtained by a single camera, an increase in system cost can be prevented. In Fig. 7B, the light distribution of the road lighting device 10b is controlled to form light shielded areas 52a and 52b so as not to provide glare to approaching vehicles 50a and 50b on the opposite traffic lane included in an illumination range 48 of the road lighting device 10b.

In the case of the situation shown in Fig. 7C, when an oncoming vehicle to which a road lighting device may provide glare is detected, the illumination directions of all or a part of the illumination beams from the road lighting device are changed according to the position of the vehicle. More specifically, upon detection of the presence of an oncoming vehicle 56 within an illumination range 54 of a road lighting device 10c, the road lighting device 10c drives the whole lamp unit to move the illumination range 54 so as not to provide glare to the oncoming vehicle 56. Also, upon detection of the presence of an oncoming vehicle 60 within an illumination range 58b, which is provided for the opposite traffic lane, of illumination ranges 58a and 58b of a road lighting device 10d, the road lighting device 10d drives a part of the light sources of the lamp unit that illuminate the illumination range 58b to move the illumination range 58b so as not to provide glare to the oncoming vehicle 60.

In these examples, approximate positions of the vehicles should desirably be measured. An approximate vehicle position is computed based on information transmitted from a radio beacon {Electronic Toll Collection System (ETC)} used on an expressway or an optical beacon installed on a national highway or the like. More specifically, an approximate current position of a vehicle is computed based on time elapsed from the passing time of the vehicle measured by a radio beacon or an optical beacon before the control as set forth above is performed.

(Traffic situation and improper crossing by a pedestrian)

There are two main types of traffic situation in which improper crossing is likely to occur. The first type is during traffic congestion. When vehicles move slowly during traffic congestion, pedestrians who improperly cross the road threading their ways between vehicles are likely to appear. Traffic congestion can be detected by obtaining an average speed of vehicles on the road and the number of the vehicles using a monitoring camera. Such an average vehicle speed and the number of the vehicles can be easily determined by processing time-series images captured by the monitoring camera. During such traffic congestion, illumination of the entire road is desired.

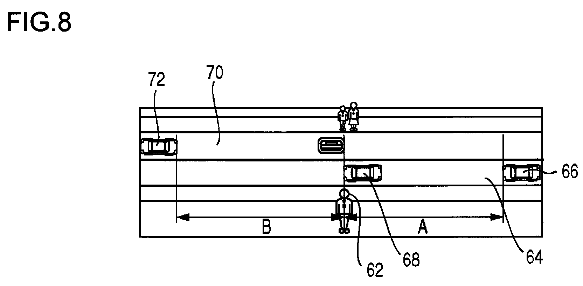

The second type is the case where traveling vehicles are absent on the road or where the traffic volume is relatively low. Improper crossing in such a situation on a two-lane road will be described with reference to Fig. 8. Fig. 8 is a schematic diagram used to describe a mechanism for causing improper crossing on a two-lane road. For the determination of occurrence of improper crossing by a pedestrian in the second type, two cases will be considered.

The first case is the case where a pedestrian 62 has judged, from the state of approaching vehicles, that it is possible to cross over to the opposite sidewalk, and the pedestrian starts to cross the road. The second case is the case where the pedestrian 62 has judged that it is impossible to cross over to the opposite sidewalk, and the pedestrian is to cross the road halfway to reach the center line. In the second case, the pedestrian is in a hurry for crossing for some reason.

The first case is further divided into three cases according to the state of approaching vehicles. The case 1-1 is the case where a traveling vehicle is present only on a traffic lane 64 on the waiting pedestrian side. In the case 1-1, when it is right after an approaching vehicle 68 passed the pedestrian 62, the question is whether the pedestrian 62 can safely cross over to the opposite sidewalk before the next traveling vehicle 66 comes close. Namely, when the traveling speed of the approaching vehicle 68 or the next traveling vehicle 66 is V and the distance between the passing approaching vehicle 68 and the next traveling vehicle 66 is A, the crossing pedestrian compares the (assumed or estimated) time to collision (TTC) A/V and the crossing time T required to cross over to the opposite sidewalk to determine the act.

The case 1-2 is the case where a traveling vehicle is present on each of the traffic lane 64 on the waiting pedestrian side and a traffic lane 70 on the opposite side. In the case 1-2, the crossing pedestrian compares the crossing time T and the time to collision for the next traveling vehicle 66 on the traffic lane 64 on the waiting pedestrian side and a traveling vehicle 72 on the traffic lane 70 on the opposite side, so as to determine the act. When it is assumed that the vehicle speeds of the traveling vehicles 66 and 72 are the same, the time to collision is (A+B)/(2V).

The case 1-3 is the case where only the vehicle 72 on the traffic lane 70 on the opposite side is present. In the case 1-3, the crossing pedestrian compares the time to collision (B/V) for the vehicle 72 on the traffic lane on the opposite side and the crossing time T, so as to determine the act.

Meanwhile, the second case is the case where there is a sufficient distance from an approaching vehicle on the traffic lane on the waiting pedestrian side, and an approaching vehicle on the traffic lane on the opposite side is expected to pass through before the pedestrian reaches the center line.

(Timing for determining improper crossing)

It is considered here the timing on which a pedestrian determines to cross the road for each of the aforementioned cases. To safely cross the road to a predetermined position, the following general formula (1) needs to hold.

$$W+J \gg T \quad \cdots \quad \text{Formula (1)}$$

In the formula, W is time required to cross over to a predetermined position (the opposite sidewalk or the center line), J is recognition reaction time required to recognize and judge the situation before starting to walk, and T is time to collision between the pedestrian and the object vehicle. Based on T, a distance relationship between the pedestrian and the vehicle, with which the pedestrian determines to cross the road, can be obtained.

Table 1 shows relationships between the time to collision and crossing determination distance in the respective cases on a two-lane road, and Table 2 shows relationships between the time to collision and crossing determination distance in the respective cases on a four-lane road.

[Table 1]

| CASE | W+J (sec) | TIME TO COLLISION T (sec) | DISTANCE TO BE CONSIDERED | CROSSING DETERMINATION DISTANCE (m) |
|------|-----------|---------------------------|---------------------------|-------------------------------------|
| 1-1  | 9         | 9                         | A                         | 90                                  |
| 1-2  | 9         | 9                         | A+B                       | 180                                 |

(continued)

| CASE | W+J (sec) | TIME TO COLLISION T (sec) | DISTANCE TO BE CONSIDERED | CROSSING DETERMINATION DISTANCE (m) |
|---|---|---|---|---|
| 1-3 | 9 | 9 | B | 90 |
| 2 | 5.5 | 5.5 | B | 55 |

[Table 2]

| CASE | W+J (sec) | TIME TO COLLISION T (sec) | DISTANCE TO BE CONSIDERED | CROSSING DETERMINATION DISTANCE (m) |
|---|---|---|---|---|
| 1-1 | 16 | 16 | A | 160 |
| 1-2 | 16 | 16 | A+B | 320 |
| 1-3 | 16 | 16 | B | 160 |
| 2 | 9 | 9 | B | 90 |

It is assumed that the road is a two-lane road of which the width RW of one lane is 3.5 m, vehicles on the road travel at the same speed VC = 10 m/s (36 km/h), a pedestrian moves at a speed VP = 1 m/s, and the recognition reaction time J required for the pedestrian to check both ways before starting to walk is 2 seconds. As a result, on the two-lane road, improper crossing is highly likely to occur when the time to collision is about 10 seconds or longer. On the other hand, when the time to collision is about 5 seconds or shorter, improper crossing is assumed not to occur because the pedestrian regards the situation as obviously dangerous. Also, on the four-lane road, improper crossing is highly likely to occur when the time to collision is about 15 seconds or longer. On the other hand, when the time to collision is about 10 seconds or shorter, improper crossing is assumed not to occur because the pedestrian regards the situation as obviously dangerous.

(Determination criteria for occurrence of improper crossing)

Tables 1 and 2 include the crossing determination distance with respect to the time to collision in each case. However, it is impractical to set the crossing determination distance as a criterion for determining improper crossing because the crossing determination distance varies according to the vehicle speed. It is practical to determine the occurrence of improper crossing based on the time to collision. Accordingly, based on the aforementioned consideration, the time to collision, the number of traffic lanes, the traffic volume, and the vehicle speed are set as the determination criteria. The traffic volume and vehicle speed are considered because improper crossing also occurs during traffic congestion. The traffic volume is desirably considered also because the traffic volume is different on each traffic lane in a signal state.

(Calculation of time to collision)

The traffic volume and average vehicle speed are preferably measured using a monitoring camera. The average vehicle speed also can be obtained by gathering individual vehicle information used in a car navigation system. In the following, a method for calculating time to collision will be described on the premise that the traffic volume and average vehicle speed have been already calculated.

When an up-lane traffic volume $M_{UP}$ [(number of vehicles)/h], a down-lane traffic volume $M_{DN}$ [(number of vehicles)/h], an up-lane average vehicle speed $V_{UP}$ [km/h], and a down-lane average vehicle speed $V_{DN}$ [km/h] have been measured, the time to collision (inter-vehicle time) AT can be derived from the following formulas (2) and (3).

```
Average inter-vehicle distance AD [m] on a certain lane

        = 1000×(V/M)        ··· Formula (2)
```

$$\text{Average inter-vehicle time AT [s] on a certain lane}$$

$$= AD/(V/3.6) = 3600/M \qquad \cdots \text{ Formula (3)}$$

Based on Formula (3), the average inter-vehicle time, or an average time to collision, on each of up and down lanes is as follows:

$$AT_{UP} = 3600/M_{UP}$$

$$AT_{DN} = 3600/M_{DN}$$

Also, the average time to collision for both up and down lanes, $AD_{BOTH}$, can be obtained by adding the following $AT_{UP}$ and $AT_{DN}$.

$$AT_{UP} = 3600/(M_{UP}+M_{DN})$$

$$AT_{DN} = 3600/(M_{UP}+M_{DN})$$

$$AD_{BOTH} = AT_{UP} + AT_{DN} = 2 \times 3600/(M_{UP}+M_{DN})$$

If the traffic volume is the same on the up and down lanes, the formula for $AD_{BOTH}$ above will be the same as Formula (3). In this way, when the average traffic volume and average vehicle speed on each traffic lane can be obtained using a monitoring camera or the like, the time to collision can be derived.

The traffic volume may be calculated for each of multiple traffic lanes if possible. Also, when the whole traffic volume of multiple up lanes or down lanes is calculated, the traffic volume of each lane may be obtained by dividing the calculation result by the number of lanes. The number of traffic lanes and the width of a traffic lane may be obtained from road map data for GPS or may be directly input to a corresponding device, for example.

(Traffic situation monitoring device)

There will now be described traffic situation monitoring devices capable of acquiring information correlated with the traffic situation around the place where a road lighting device is installed.

There are devices for automatically measuring and accumulating the number of traveling vehicles and the type and the average speed of a vehicle so as to monitor the traffic situation on a road. Specifically, there are methods for detecting vehicles using loop coils or ultrasonic.

Also, methods using cameras have been increasingly employed in recent years. For example, a system has been devised in which images captured by a camera placed along a road are automatically monitored using image processing techniques, so as to detect a dangerous event on the road (such as traffic congestion and an obstacle) and measure the traffic conditions. Also, based on the detection results and measurements, a danger warning may be given to drivers using an information board, or a notification for road management may be provided. Accordingly, secondary accidents can be prevented, and a response such as dispatch of a patrol car can be promptly provided, thereby contributing to safer and more secure road environments.

In order to solve a problem in a method using images, there has been also devised a system that identifies the type of a vehicle passing through a detection area by inferring the shape of the vehicle from multiple pieces of information on the vehicle. This system detects the moving speed of a detected vehicle, thereby enabling detection of an event on the road, such as traffic congestion. Also, an automatic vehicle number reader or an automatic speed trap may also be used as a traffic situation monitoring device.

(Method for measuring traffic volume and average vehicle speed using traffic situation monitoring device)

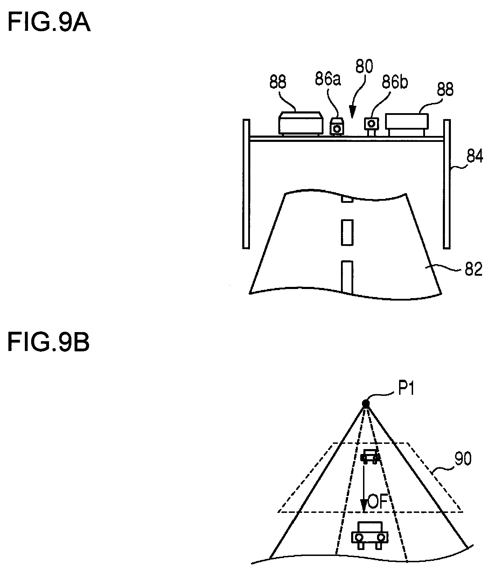

Fig. 9A is a diagram that shows an installation example of a traffic situation monitoring device, and Fig. 9B is a diagram that shows an example of an image used for measurement of vehicle speed and traffic volume on a road.

A traffic situation monitoring device 80 shown in Fig. 9A is mounted to a mounting frame 84 of a gate shape to monitor a road 82 and the vicinity thereof from right above. The traffic situation monitoring device 80 comprises cameras 86a and 86b and related equipment (such as strobe lights 88), facing the traveling direction of a vehicle and the opposite direction for up and down lanes. An image processing device may be installed in another place. The traffic situation monitoring device 80 may be mounted to a pole placed on a side strip instead of the gate-shaped frame.

The image processing device included in the traffic situation monitoring device 80 autonomously measures spatial position coordinates of marking lines, a center strip, road shoulder, and sidewalk, which determine the features of the structure and shape of the road within the capturing range, excluding moving objects, from successive image data obtained from the cameras 86a and 86b, and stores such road shape data and a vanishing point P1 (see Fig. 9B) in the traffic situation monitoring device 80. The image processing device also sets a measurement range for monitoring and finishes the initial setting.

The image processing device then performs image processing and detection of a traveling vehicle. More specifically, the image processing device compares a candidate of an object on the road, obtained by processing an image of an area within the measurement range, and road shape data stored in the road monitoring device so as to recognize an object on the road. Subsequently, the image processing device obtains the optical flow (OF) of the object on the road from time-series image data, and, when OF > 0, the image processing device judges the object as a traveling vehicle, so as to tag the vehicle and obtain the position thereof.

Next, the image processing device counts the number of vehicles. Specifically, the image processing device tags a vehicle newly appearing within a measurement range 90 shown in Fig. 9B. At the time when a tagged vehicle disappears from the measurement range 90, the image processing device includes the vehicle in the cumulative count. The image processing device then measures a vehicle speed. Specifically, a vehicle speed of a traveling vehicle can be obtained from OF for a predetermined time. Thereafter, the image processing device measures the traffic volume and average vehicle speed. Specifically, the image processing device monitors a tagged vehicle for a predetermined time, so as to obtain the number of traveling vehicles (traffic volume) and the average vehicle speed.

The measurement for the up and down lanes may be performed by specifying the measurement range for each of the lanes. At the time, the directions of OF vectors of the up and down lanes are opposite to each other. Also, the measurement at night may be performed by detecting a light-emitting body, such as a headlight and a rear light.

(Road lighting control method)

Table 3 shows illumination modes and differences in features of the illumination modes in a system for controlling a road lighting device according to the traffic volume (traffic density).

[Table 3]

| ILLUMINATION MODE | TRAFFIC SITUATION | ILLUMINATION RANGE | APPLICATION | PURPOSES AND REMARKS |
|---|---|---|---|---|
| SECURITY MODE ▪ MINIMAL TRAFFICDENSITY ▪ FREE RAVELING ▪ LATE AT NIGHT | ▪ VEHICLE TRAVELING ALONE ▪ NO OTHER VEHICLES TRAVELING WITHIN PREDETERMINED SECTION ▪ HIGH BEAM LSED | VICINITY SIDEWALK AND ROAD SHOULDER TRAVELING LANE OPPOSITE LANE | ○ ○ × × | SECURITY OF PEDESTRIANS ENERGY SAVING VISIBILITY OF TRAVELING LANE IS ENSURED WITH HIGH BEAM. |
| OFF-PEAK MODE ▪ LOW RAFFIC DENSITY ▪ FOLLOWING TRAVEL | ▪ VEHICLE TRAVELING ALONE ▪ PRECEDING VEHICLES IN PLACES ▪ SWITCHING BETWEEN HIGH AND LOW BEAMS | VICINITY SIDEWALK AND ROAD SHOULDER TRAVELING LANE OPPOSITE LANE | △ ○ ◎ △ | OBSTACLES OR IMPROPERLY-CROSSING PEDESTRIANS MAY BE PRESENT ON THE ROAD |

(continued)

| ILLUMINATION MODE | TRAFFIC SITUATION | ILLUMINATION RANGE | APPLICATION | PURPOSES AND REMARKS |
|---|---|---|---|---|
| HEAVY TRAFFIC MODE<br><br>▪ HIGH TRAFFIC DENSITY<br><br><br>▪ FOLLOWING TRAVEL | ▪ HIGH TRAFFIC DENSITY<br>▪ INCOMING VEHICLE PRESENT<br>▪ LOW BEAM | VICINITY SIDEWALK AND ROAD SHOULDER<br><br>TRAVELING LANE<br>OPPOSITE LANE | ○<br>◎<br><br><br>○<br><br>× | SATISFYING ILLUMINATION FOR WAITING PEDESTRIANS ON THE SIDEWALK<br>NO OBSTACLES ON THE ROAD |
| TRAFFIC CONGESTION MODE<br><br>▪ MAXIMAL TRAFFIC DENSITY<br>▪ COMMUTING HOURS | ▪ CONGESTION DUE TO TRAFFIC LIGHTS<br>▪ CONGES ION DUE TO COMMUTING<br>▪ LOW BEAM | VICINITY SIDEWALK AND ROAD SHOULDER<br>TRAVELING LANE<br>OPPOSITE LANE | ○<br>○<br><br>○<br><br>○ | IMPROPERLY-CROSSING PEDESTRIANS DURING TRAFFIC CONGESTION MOVING AT LOW SPEED |

First, a road including the vicinity thereof is divided into four illumination ranges. Also, four illumination modes are set according to the traffic density to illuminate a necessary range so as to satisfy both energy saving and prevention of traffic accidents or improvement in security. Switching among the multiple illumination modes is performed based on the traffic volume and average vehicle speed, for example. The average vehicle speed is especially associated with the switching among an off-peak mode, a heavy traffic mode, and a traffic congestion mode. In table 3, a double circle, circle, triangle, or cross in an application field indicates the amount of illumination light.

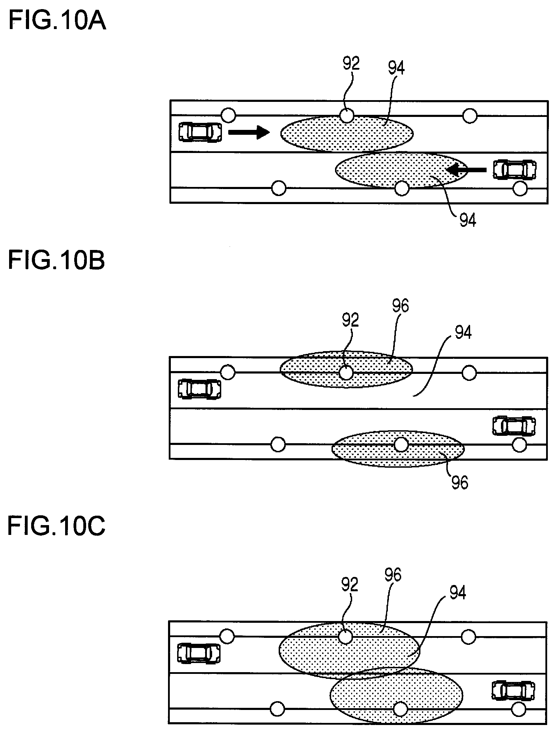

Fig. 10A is a diagram that schematically shows light distributions in the off-peak mode, Fig. 10B is a diagram that schematically shows light distributions in the heavy traffic mode, and Fig. 10C is a diagram that schematically shows light distributions in the traffic congestion mode. In the following is described an example of lighting control method in which the off-peak mode (corresponding to the second case mentioned previously), which provides functions same as those of general road lighting and which causes improper crossing and is thus most important, is considered as the base, and other modes are added. Figs. 10A and 10B show examples in which the off-peak mode and the heavy traffic mode are switched therebetween by swiveling road lighting devices including lamp units, which provide symmetric light distributions.

In the off-peak mode shown in Fig. 10A, the traffic volume is low, so that an improperly-crossing pedestrian or a fallen object may be possibly present on the road. Therefore, a road 94 is mainly illuminated, as is conventionally done. In the heavy traffic mode shown in Fig. 10B, on the other hand, there is no fallen object on the road because vehicles are continuously passing. Accordingly, the vicinities of a road shoulder and a sidewalk 96 are illuminated so that a sudden rush out of a pedestrian from the sidewalk 96 or road shoulder can be checked.

In the traffic congestion mode shown in Fig. 10C, when the light distributed from the road lighting devices 92 is diffused overall to cover the road 94 and sidewalk 96, illumination required in traffic congestion can be provided. Since vehicles are traveling at low speeds or stopping, the light amount required to detect an improperly-crossing pedestrian during traffic congestion is less than that when vehicles are traveling at normal speeds, such as 60 km/h.

The traffic volume of the road 94 is different depending on the signal aspect. When a traffic light changes from red to green or from green to red, the traffic volume in the traveling direction increases or decreases right after the change. The traffic volume may also vary during a red light as vehicles that have turned right or left join the traffic. The signal aspect of a traffic light may be monitored by a monitoring camera, and the traffic volume may be estimated using a traffic volume model in which time zones or the likes are considered. The signal aspect may be determined using a monitoring camera. Although the road lighting devices shown in Figs. 10A-10C are described using examples of symmetric light distributions, all or part of the four illumination modes may be performed using road lighting devices providing asymmetric light distributions as shown in Fig. 3.

(Road lighting control system)

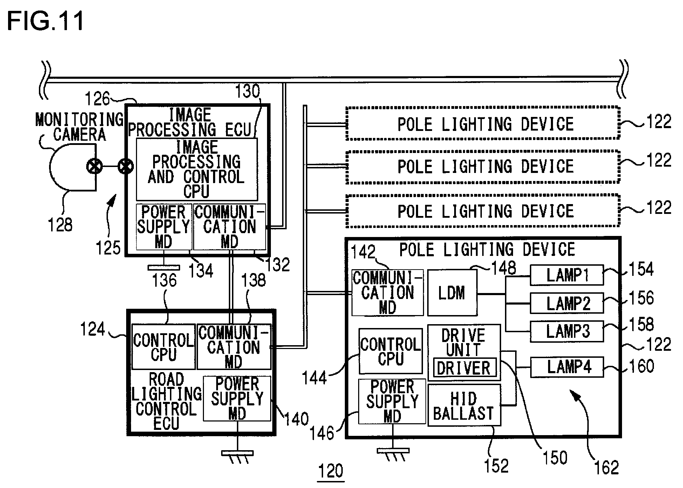

Fig. 11 is a block diagram that shows a schematic configuration of a road lighting control system according to the present embodiment. A road lighting control system 120 comprises pole lighting devices 122 as road lighting devices, a road lighting control ECU 124 for controlling multiple pole lighting devices 122, and a traffic situation monitoring device 125.

The traffic situation monitoring device 125 includes an image processing ECU 126 and a monitoring camera 128 for capturing an image of a road and the vicinity thereof. The traffic situation monitoring device 125 may be installed at a major intersection or a traffic volume measuring point, for example. After the installation, the traffic situation monitoring device 125 autonomously measures the road structure using the monitoring camera 128 or the like and stores the road shape data in the device. After the operation of the device is started, an image processing and control CPU 130 detects a traveling vehicle on each of up and down lanes of the road based on image information acquired by the monitoring camera 128 and computes the vehicle speed, and also computes the traffic volume (traffic density) per unit time and the average vehicle speed, so as to provide the resulting data to each road lighting control ECU 124 within a specified section.

When there is a traffic light within the capturing range of the monitoring camera 128, the signal state may be detected based on image information, or the measurement cycle time may be reduced at the timing of a signal change. The image processing and control CPU 130 also analyzes an image captured by the monitoring camera 128 to determine the condition of the road surface, such as the wet, dry, a flood, or snow, and uploads data including the results to a predetermined system server via a communication module (communication MD) 132 and the Internet. The image processing ECU 126 also includes a power supply module (power supply MD) 134.

The traffic situation monitoring device 125 may be connected to the following servers. A weather data providing server provides weather basic data, such as the outside air temperature, air volume, rainfall amount, and atmospheric pressure in a certain area. A road traffic information providing server provides the traffic density of up and down lanes of each road measured at a major intersection or a traffic volume measuring point using a radio beacon, an optical beacon, or a monitoring camera, and also provides the association between the traffic density and the signal state. The road traffic information providing server computes the traffic volume (traffic density) using a traffic volume model, as needed. The road traffic information providing server also analyzes an image from a monitoring camera to determine the road surface condition, such as the wet, dry, a flood, or snow, and provides the result. A traffic management system server provides the signal state (red, green, or yellow) on a road toward each direction at a signalized intersection, and the duration time of the state. A road monitoring data providing server provides information about a vehicle traveling on the road detected by a monitoring camera or about a vehicle speed measured by an automatic speed trap, and also provides an average vehicle speed. A road map data server provides the number of traffic lanes and the width of a road at a node position, and position information of a node.

The road lighting control ECU 124 includes a control CPU 136, a communication module 138, and a power supply module 140. Based on information including the road surface condition, traffic volume, average vehicle speed, and time to collision provided by the traffic situation monitoring device 125 via the communication modules 132 and 138, the control CPU 136 determines an illumination mode and a light distribution ideal for the road traffic environment to be illuminated by each pole lighting device 122. The road lighting control ECU 124 then transmits information on the determined illumination mode and light distribution to each pole lighting device 122 via the communication module 138.

A pole lighting device 122 includes a communication module (communication MD) 142, a control CPU 144, a power supply module (power supply MD) 146, an LED driver module (LDM) 148, a drive unit 150, a high intensity discharge lamp (HID) ballast 152, and lamps 154, 156, 158, and 160.

The communication module 142 receives data transmitted from the road lighting control ECU 124. The LED driver module (LDM) 148 controls lighting of the three lamps 154, 156, and 158, which are LED lamps. Each of the three lamps 154, 156, and 158 may have different light distribution characteristics. The lamp 160 is a projector lamp using, for example, a metal halide lamp as the light source, and a movable MEMS mirror is fitted within the lamp. The drive unit 150 drives the MEMS mirror via a driver, and the HID ballast 152 controls lighting of the metal halide lamp. The control CPU 144 controls turning on and off and the light amount of each of the lamps 154, 156, 158, and 160, and the illumination direction of the lamp 160 driven by the drive unit 150, based on information about the illumination mode and light distribution received from the road lighting control ECU 124 via the communication module 142.

Thus, a pole lighting device 122 comprises the communication module 142 that acquires information indicating whether or not a pedestrian's improper crossing is likely to occur in the situation, which is judged based on information correlated with the traffic situation around the place where the pole lighting device 122 is installed, and also comprises a light distribution control unit (control CPU 144) that controls the light distribution of a lamp unit 162 based on the information acquired by the communication module 142. The light distribution control unit controls the lighting state or the illumination direction of the lamp unit 162. Accordingly, in a situation where improper crossing is likely to occur, the driver of a vehicle can recognize more easily a pedestrian improperly crossing the road.

(Lamp unit)

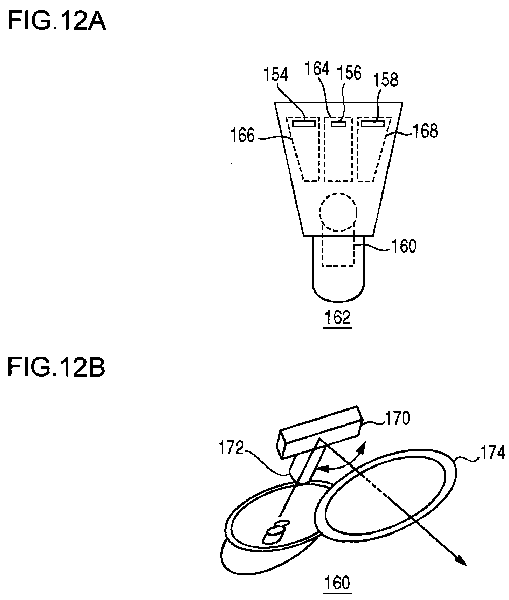

The lamp unit 162 including the lamps 154, 156, 158, and 160 will be detailed. Fig. 12A is a diagram that shows a schematic configuration of the lamp unit 162, and Fig. 12B is a diagram that shows a schematic configuration of the projector lamp 160.

In the lamp unit 162, the lamp 156 provided with a parabolic mirror 164 is arranged at the center of the upper part so as to provide a light distribution for collecting light, the lamp 154 provided with a parabolic cylinder mirror 166 is arranged on the left side of the upper part so as to provide a light distribution for moderately diffusing light, and the lamp 158 provided with a hyperbolic cylinder mirror 168 is arranged on the right side of the upper part so as to provide a light distribution for highly diffusing light, as shown in Fig. 12A.

In the lower part of the lamp unit 162, the projector lamp 160 using a high-intensity metal halide lamp as the light source is arranged. Within the lamp 160, a movable MEMS mirror 170 is fitted as shown in Fig. 12B, and illumination beams can be reduced or shielded by partially changing the reflection position of the MEMS mirror 170 according to whether or not a preceding vehicle is present. The MEMS mirror 170 is provided with a rotary drive unit 172, and the light distribution can be swiveled in the horizontal direction by driving and controlling the rotary drive unit 172. The lamp 160 includes a projection lens 174.

Such swivel control is performed to illuminate the sidewalk side, when the traffic density is higher than a predetermined condition, when it is raining, snowing, or foggy, when the road surface is flooded or wet, or when the road surface is dry or covered by snow.

(Control flow of road lighting device system)

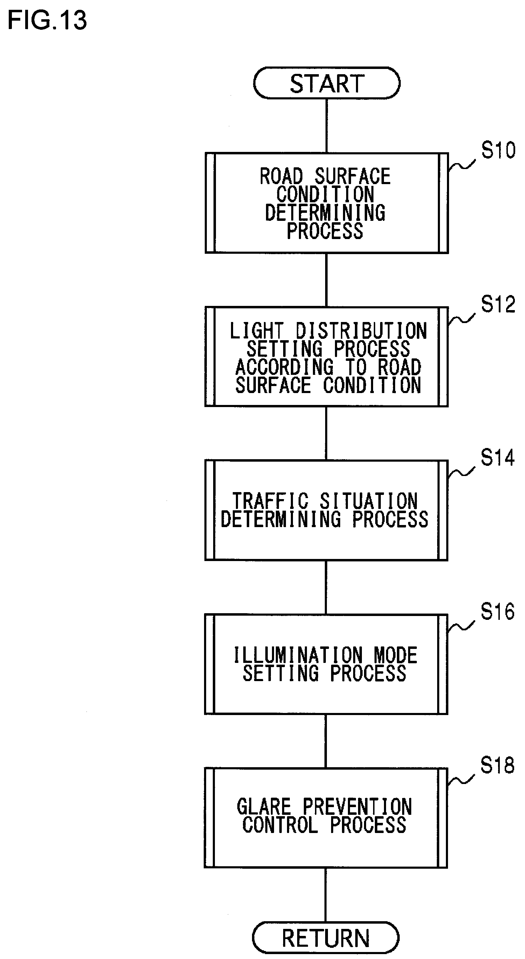

Fig. 13 is a flowchart that shows a method for controlling a road lighting device system according to the present embodiment.

First, a road surface condition determining process is performed (S10). In the process, the road surface condition is determined based on the luminance contrast of a marking line obtained from a road surface monitoring camera, and a mirror reflection image (beam of light) of road lighting reflected on the road surface. Information on the determination results is then uploaded to the Internet.

Next, a light distribution setting process is performed according to the road surface condition (S12). For example, when the road surface is wet or flooded, light distribution is set to reduce the amount of beams toward the opposite lane side in order to prevent glare. Also, in rainy weather, light of road lighting is mirror-reflected on the road surface, which is likely to cause glare to an oncoming vehicle. Accordingly, as shown in Fig. 7C, beams may be controlled so as to be directed to the road shoulder side, not to the opposite lane side. In this way, by only illuminating the traveling lane in rainy weather, glare to an oncoming vehicle can be reduced compared to a conventional case.

Thereafter, a traffic situation determining process is performed (S14). In the process, occurrence of improper crossing is determined based on road traffic information (the traffic volume, average vehicle speed, and signal state), road structure information (the number of traffic lanes, road width, and presence of a median strip or sidewalk), and computed time to collision, obtained from the traffic situation monitoring device 125.

Based on the determination result of occurrence of improper crossing, a process for setting the illumination mode of a road lighting device is performed (S16). The illumination mode is selected from among, for example, a security mode, which aims for both the security of pedestrians and energy saving, the off-peak mode, the heavy traffic mode, and the traffic congestion mode shown in Table 3. A pole lighting device 122 then controls the light distribution of each lamp according to the selected illumination mode.

When the pole lighting device 122 executes the selected illumination mode, light distribution control is performed to prevent glare to a traveling vehicle or the like (S18). More specifically, the position of a traveling vehicle is detected from an image captured by the monitoring camera 128 mounted to the pole, and the vehicle position is converted into a coordinate position for light distribution in the pole lighting device 122. The vehicle position is also transmitted to another pole lighting device 122 for which the monitoring camera 128 is not installed. The another pole lighting device 122 then converts the vehicle position into a spatial coordinates in the device. Each lighting device controls the lamp unit so as to mask beams directed to the vehicle position or to change the direction of beams toward the opposite lane to the traveling lane. For a lighting device for which no camera is installed, since the accuracy of a vehicle position may be reduced as the vehicle position is computed based on indirectly-acquired information, the masking (partially shielding) range may be increased in consideration thereof.

The processes of the steps S10-S18 are repeated when the weather information is updated. Also, the processes of the steps S14-S18 may be repeated based on the cycle of a traffic light.

There will now be described the operation of each device in the traffic situation determining process and the illumination mode setting process. As stated previously, the road lighting control ECU 124 shown in Fig. 11 comprises a control means (control CPU 136) that controls the light distribution of a pole lighting device 122 capable of illuminating a road and a sidewalk, and a determination means (control CPU 136) that determines whether or not a pedestrian's improper crossing is likely to occur in the situation, based on information correlated with the traffic situation around the place where the pole lighting device 122 is installed. When it is determined that improper crossing is likely to occur in the situation, the control means controls the light distribution of the pole lighting device 122 so that the visibility of an improperly-crossing pedestrian is improved. Accordingly, in a situation where improper crossing is likely to occur, the driver of a vehicle can recognize more easily a pedestrian improperly crossing the road.

The control CPU 136 may acquire information correlated with the traffic volume of a road in the place where a pole lighting device 122 is installed (such as the traffic volume, average vehicle speed, and signal state) and, when the traffic volume is higher than a predetermined off-peak traffic volume threshold, the control CPU 136 may judge that a pedestrian's improper crossing is likely to occur in the situation.

When the traffic volume is higher than a predetermined off-peak traffic volume threshold M1, the control CPU 136 controls the light distribution of the pole lighting device 122 so as to mainly illuminate the traffic lane on the pole lighting device 122 side (see Fig. 10A). This facilitates the detection of a pedestrian improperly crossing the traffic lane on the pole lighting device 122 side, using the pole lighting device 122.

When the traffic volume is higher than the predetermined off-peak traffic volume threshold M1 and is lower than or equal to a predetermined heavy traffic volume threshold M2, which is higher than the predetermined off-peak traffic volume threshold (i.e., M2>M1), the control CPU 136 controls the light distribution of the pole lighting device 122 so as to mainly illuminate the traffic lane on the pole lighting device 122 side. When the traffic volume is higher than the predetermined heavy traffic volume threshold, the control CPU 136 controls the light distribution of the pole lighting device 122 so as to mainly illuminate the vicinity of the sidewalk on the road lighting device side (see Fig. 10B). When the traffic volume is higher than the predetermined heavy traffic volume threshold M2, since vehicles are intermittently traveling on the road, the probability of a fallen object or another object present on the road is low. Therefore, by allowing the pole lighting device 122 to mainly illuminate the vicinity of the sidewalk or road shoulder, a pedestrian who rushed out from the sidewalk or road shoulder to start improper crossing can be checked more easily.

The control CPU 136 further acquires information correlated with the average vehicle speed on the road in the place where the pole lighting device 122 is installed. When the average vehicle speed is higher than a predetermined traffic congestion speed threshold V1 and also the traffic volume is higher than a predetermined congestion traffic volume threshold M3 (M3>M2), the control CPU 136 controls the light distribution of the pole lighting device 122 so as to illuminate, with diffusion light, a wider range including the traffic lane on the pole lighting device 122 side and at least part of the opposite lane (see Fig. 10C). When the traffic volume is higher than the predetermined congestion traffic volume threshold M3, vehicles on the road are traveling at low speeds or stopping. In such a case, since the light amount required to detect an improperly-crossing pedestrian is less than usual, the amount of light emitted by the pole lighting device 122 toward the illumination area is reduced, and the illumination area is extended using diffusion light, thereby facilitating the detection of an improperly-crossing pedestrian.

When the traffic volume is lower than the predetermined off-peak traffic volume threshold M1, the control CPU 136 provides control to reduce or tune off the light from the pole lighting device 122 (the security mode shown in Table 3). Since serious consideration of improper crossing is not required in a situation where few vehicles are traveling, energy consumption can be curbed by reducing or tuning off the light from the pole lighting device 122 while the security of pedestrians is considered.

As the information correlated with the traffic situation, the control CPU 136 may acquire signal aspect information of a traffic light positioned around the place where the pole lighting device 122 is installed, so as to determine whether or not a pedestrian's improper crossing is likely to occur in the situation based on the signal aspect information. Depending on the signal aspect of a traffic light positioned around the place where the pole lighting device 122 is installed, the speed of a vehicle traveling on the road before or behind the traffic light and the traffic volume of the road will change, so that the traffic situation can be easily estimated. The signal aspect includes various lighting or flashing states provided by a traffic light, such as a steady red light, a steady green light, a flashing red light, and a flashing yellow light.

The control CPU 136 may control the light distribution of a first pole lighting device 122 illuminating a road and a sidewalk included in image information of an image captured by a camera, which is regarded as the information correlated with the traffic situation, and the control CPU 136 may also control the light distribution of a second pole lighting device 122 illuminating a road and a sidewalk that are not included in the image information. For example, when multiple pole lighting devices 122 are arranged at intervals along a road, there is often little difference in traffic situation between the illumination ranges of the pole lighting devices 122. Accordingly, when the light distributions of the multiple pole lighting devices 122 are controlled based on image information of an image captured by a single monitoring camera 128, there is no need to provide a camera for each pole lighting device 122.

(Light distribution of road lighting device)

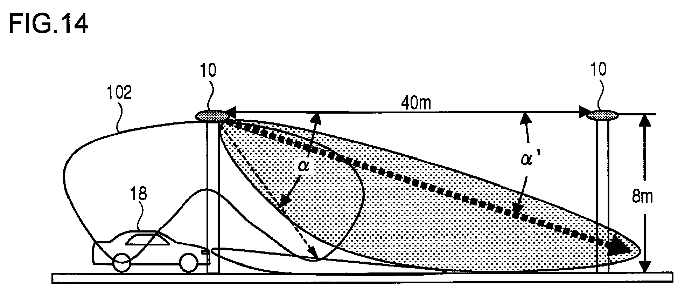

Fig. 14 is a diagram that shows a light distribution of a road lighting device according to the present embodiment,

on a vertical cross section including the traveling direction of a vehicle. As described previously, the light distribution of a conventional road lighting device on a vertical cross section including the traveling direction of a vehicle is a symmetric light distribution providing the illumination range 102 of a bow-tie shape, as shown in Fig. 14. On the other hand, the light distribution of the road lighting device 10 according to the present embodiment on a vertical cross section including the traveling direction of a vehicle is an asymmetric light distribution extending toward the traveling direction.

A maximum luminous intensity position $\alpha$ of a conventional road lighting device extends in a wide range of 30 to 60 degrees from a horizontal direction. In the case of such one lighting device, the position of the maximum road surface luminance will be $8 \times \tan(90°\text{-}60°) \approx 5$ m, which is closer to the vehicle 18 than the position of the maximum road surface luminance provided by the headlights of the vehicle 18. Meanwhile, a maximum luminous intensity position $\alpha'$ of the road lighting device 10 according to the present embodiment is in the range of 10 to 30 degrees from the horizontal direction. The position of the maximum road surface luminance provided by the road lighting device 10 will be $8 \times \tan(90°\text{-}30°) \approx 14$ m, which is farther than the position of the maximum road surface luminance provided by the low beam headlights of the vehicle 18 (about 10 meters ahead of the vehicle). With the road lighting device 10 providing such light distribution, the continuity (uniformity) of lighting in fusion with headlights can be improved.

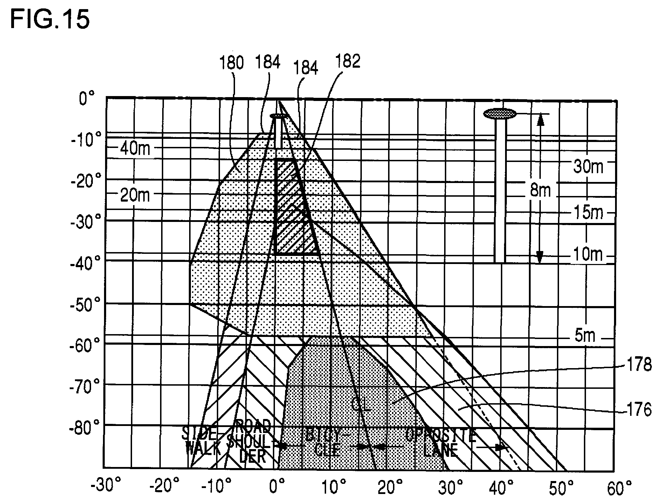

Fig. 15 is a diagram that shows road surface luminance distribution viewed, toward the traveling direction of a vehicle, from the position of a monitoring camera provided at the top (eight meters above the ground) of a road lighting device according to the present embodiment. In the light distribution of a conventional road lighting device, the road surface luminance is 0.5 cd/m$^2$ or greater in an illumination range 176 and 1.0 cd/m$^2$ or greater in an illumination range 178. In the light distribution of the road lighting device 10 according to the present embodiment, on the other hand, the road surface luminance is 0.3 cd/m$^2$ or greater in an illumination range 180 and 0.5 cd/m$^2$ or greater in an illumination range 182.

The features and effects of such light distribution will be mainly the following three points.

(1) The road lighting device according to the present embodiment brightly illuminates a farther point than a conventional lighting device. More specifically, the lamp unit of the road lighting device according to the present embodiment is configured so that the road surface luminance is 0.5 cd/m$^2$ or greater at a position 20 meters ahead of the place where the road lighting device is installed in the traveling direction (the illumination range 182 shown in Fig. 15, for example). Accordingly, the road lighting device can brightly illuminate a farther point on the road in the traveling direction. Also, with the road lighting device configured in this way, the continuity (uniformity) of lighting can be improved in a road environment in which the road is also illuminated by headlights, so that safety and comfortability in driving can also be improved.

(2) Although a conventional road lighting device, of which the optical axis is directed toward the opposite sidewalk, cannot illuminate the background of a pedestrian present ahead in the traveling direction of the vehicle, the road lighting device according to the present embodiment enables such illumination. Accordingly, a side wall of a building appears bright, the brightness of the entire road space is improved, and the road shape can be checked more easily, so that safety and comfortability in driving can be improved.

(3) As shown in Fig. 15, the light distribution of the road lighting device 10 is almost trapezoidal in shape. Also, a cutoff 184 is provided, similarly to the case of the low beam headlights, at a position about 10 degrees downward from the horizontal line. The cutoff 184 prevents glare to a preceding vehicle or an oncoming vehicle.

Thus, the lamp unit 162 is configured to provide a trapezoidal light distribution corresponding to the road shape toward the traveling direction. Accordingly, a road can be equally illuminated toward the traveling direction. Based on the lamp unit 162 shown in Fig. 12 providing such light distribution, the configuration of each component and a modification will be further detailed.

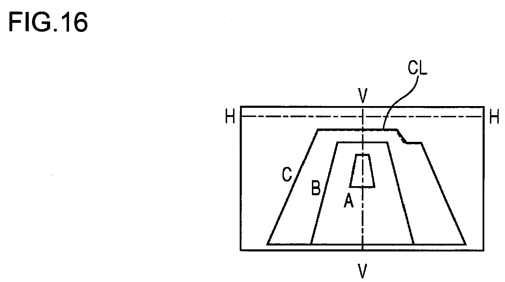

Fig. 16 is a diagram that schematically shows the luminance distribution on the road surface illuminated by the road lighting device according to the present embodiment shown in Fig. 15. The road surface luminance distribution shown in Fig. 16 is almost trapezoidal in shape viewed from the lamp unit, and a cutoff line is provided, similarly to the case of the low beam headlights, at a position about 10 degrees downward from the horizontal line (H-H line). The light distribution pattern of the road lighting device that creates such trapezoidal luminance distribution is also trapezoidal. Specifically, luminous intensity distribution (light distribution) of a lamp may be determined in consideration of a road surface luminance coefficient.

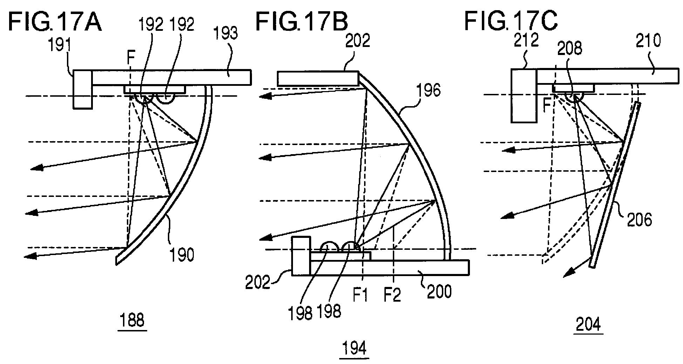

Optical systems for producing light distribution patterns A, B, and C shown in Fig. 16 will be described. Figs. 17A and 17B are schematic sectional views of focused beam optical systems producing the light distribution pattern A, and Fig. 17C is a schematic sectional view of a diffused beam optical system producing the light distribution patterns B and C.

A focused beam optical system 188 shown in Fig. 17A comprises a reflecting mirror 190 having a paraboloid, LED light sources 192 that are positioned closer to the reflecting mirror 190 than the focal point F of the paraboloid is, a heat sink 193 to which the LED light sources 192 are mounted, and a light-shielding plate 191 that shields part of direct light from the LED light sources 192 to prevent glare. Also, a focused beam optical system 194 shown in Fig. 17B comprises a reflecting mirror 196 having a multifocal paraboloid, LED light sources 198 that are positioned farther from the reflecting mirror 196 than multiple focal points F1 and F2 are, a heat sink 200 to which the LED light sources 198 are mounted, and a light-shielding plate 202 that shields part of direct light from the LEDs to prevent glare. The optical systems 188 and 194 are used for the lamp 156, for example.

Meanwhile, a diffused beam optical system 204 shown in Fig. 17C comprises a reflecting mirror 206 having a parabolic cylindrical surface or a hyperbolic cylindrical surface, an LED light source 208 that is positioned closer to the reflecting mirror 206 than the focal point F of the parabolic cylindrical surface or hyperbolic cylindrical surface is, a heat sink 210 to which the LED light source 208 is mounted, and a light-shielding plate 212 that shields part of direct light from the LED light source 208 to prevent glare. The optical system 204 is used for the lamp 154 or 158, for example.

The light distribution pattern B for moderate diffusion and the light distribution pattern C for low luminous intensity and high diffusion can be separately provided by appropriately using reflecting mirrors with different focal lengths. Also, a step in the cutoff can be formed by adjusting the direction of the optical axis. For higher diffusion, multiple LEDs may be arranged in the direction perpendicular to the optical axis.

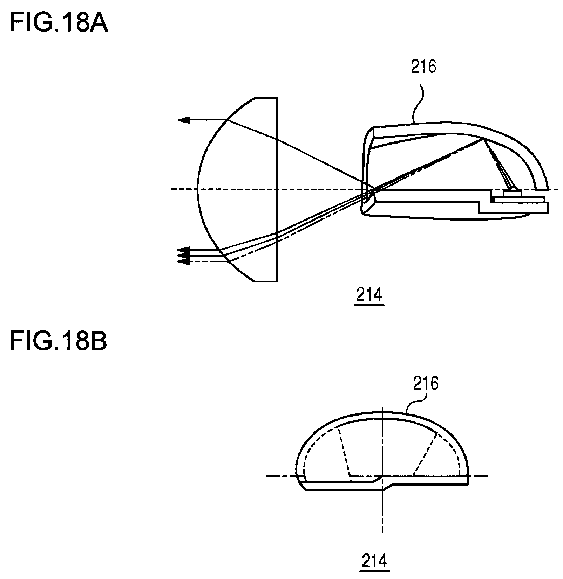

Fig. 18A is a schematic sectional view of an optical system producing a cutoff line, and Fig. 18B is a front view of the optical system shown in Fig. 18A. In an optical system 214 shown in Figs. 18A and 18B, the shape of an end surface of a reflecting mirror 216 corresponds to the shape of the cutoff. By appropriately combining the elements of this optical system and the elements of the optical systems shown in Figs. 17A-17C, a desired light distribution can be obtained.

There will now be described an optical system using a MEMS mirror as a technique for preventing glare. As stated previously, beams emitted toward the opposite traffic lane could be glare for the driver of a traveling vehicle. Accordingly, since glare could be caused, for example, by beams toward an area above a line directed 20 degrees downward from the horizontal line (when the installation height of the lamp unit is 8 meters, the area is farther than a position 20 meters ahead of the installation place), beams emitted toward such an area including a vehicle should be desirably reduced after the presence and position of the vehicle is checked using a monitoring camera.

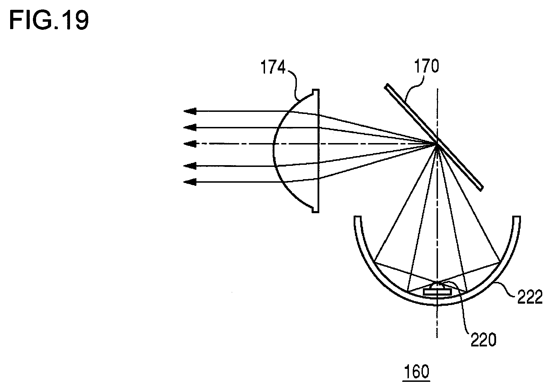

Fig. 19 is a schematic sectional view of an optical system constituting the lamp 160 shown in Fig. 12B. The lamp 160 shown in Fig. 19 is a projector optical system employing the MEMS mirror 170. Accordingly, dimming control is provided to MEMS elements at positions that provide light beams directed to an oncoming vehicle, among light beams that have been emitted from a light source 220, collected by a reflecting mirror 222, and incident on the MEMS mirror 170. Therefore, light beams directed to an area in which an oncoming vehicle is present can be reduced or shielded in a light distribution pattern.

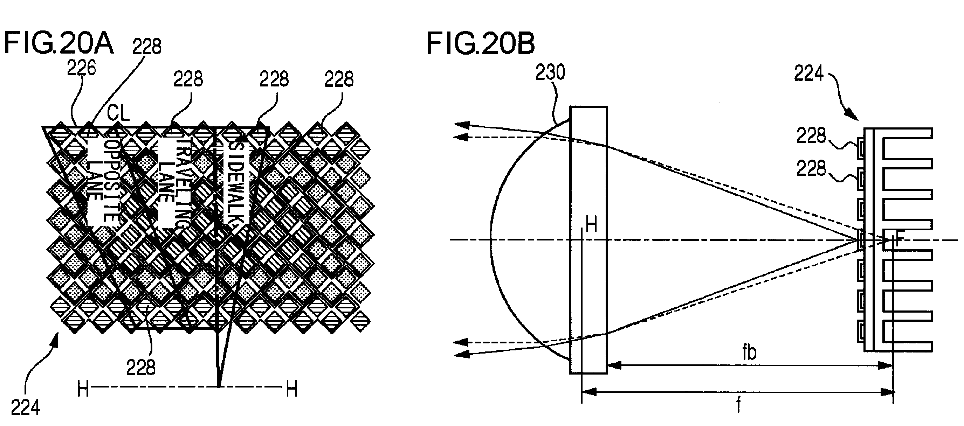

Fig. 20A is a schematic diagram that shows correspondence relationships between a matrix LED and illumination areas, and Fig. 20B is a schematic configuration diagram of the main part of a projector optical system viewed from a side. In a light source 224 constituted by a matrix LED as shown in Fig. 20A, dimming control may be provided to, among multiple LED chips 228 present in an area 226 that corresponds to an opposite traffic lane, a part of the LED chips that can illuminate an area in which an oncoming vehicle is present, for example. Since a projection image is reversed vertically and horizontally in a projector optical system, as shown in Fig. 20A, dimming control is provided to each LED chip in consideration thereof.

In the light source 224 shown in Fig. 20B, the multiple LED chips 228 are arranged forward of the focal point F of a condenser lens 230. Since there is a non-light emitting part between chips in a matrix LED light source, if the matrix LED is placed at the position of the focal point of the condenser lens 230, such a non-light emitting part will produce a dark zone on a road surface. Accordingly, in order to prevent such state, the light source is placed at a defocused position shifted from the focal point toward the lens. Also, in a matrix LED, the luminance of LEDs illuminating a sidewalk, for example, may be adjusted according to the weather or traffic volume.

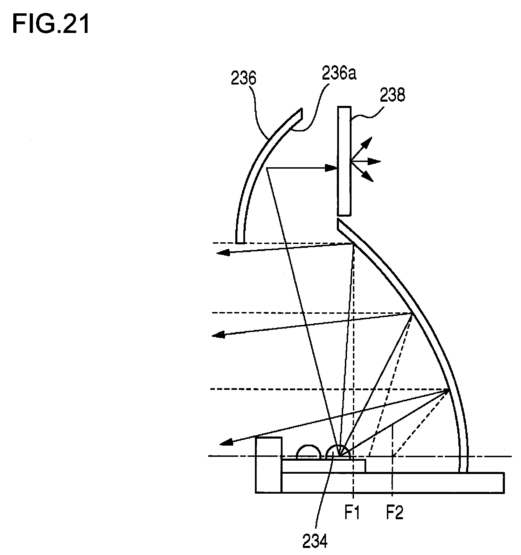

Fig. 21 is a schematic sectional view of an exemplary optical system according to a modification of the present embodiment. For a road lighting device is also required the function to show the road shape when the installation place of the road lighting device is recognized. In the road lighting device according to the present embodiment, the main optical axis is set to mainly illuminate an area in the traveling direction from the place where the road lighting device is installed. Accordingly, it may be required to improve the visibility of the road shape from a vehicle approaching the road lighting device.

An optical system 232 shown in Fig. 21 is provided with a sub-reflector 236 that reflects part of light emitted from a light source 234 to a direction opposite to that of the main optical axis. Light reflected on a reflecting surface 236a of the sub-reflector 236 is then incident on a diffuser plate 238, which is positioned to face the reflecting surface 236a, to be diffused in a wide range. The diffuser plate 238 functions as a rear visible portion that emits light toward a direction opposite to the traveling direction so that the driver of a vehicle approaching the road lighting device can visually recognize the rear visible portion. By incorporating such optical system 232 into a lamp unit, the driver of a vehicle can recognize the positions of the road lighting devices placed along a road and can also recognize the road shape in the traveling direction more easily.

In the following, various aspects of the present embodiment will be cited.

A road lighting control device may be configured so that at least two of the aforementioned four illumination modes can be set for the light distribution of a road lighting device placed within a predetermined section or at a specific position, among road lighting devices of which the light distributions can be controlled according to the road traffic environment.

The road lighting control system 120 comprises: the traffic situation monitoring device 125 including a road monitoring camera provided in space above the road or near a road shoulder, and an image processing device that processes image data and time-series image data constituted by successive image data, obtained from the monitoring camera; the road lighting control ECU 124 that controls the light distribution of a road lighting device based on road traffic information data obtained from the traffic situation monitoring device 125; and a pole lighting device 122 that controls the light distribution of road lighting according to a control instruction from the road lighting control ECU 124.

The traffic situation monitoring device 125 also includes the image processing and control CPU 130 that autonomously measures and acquires the number of traffic lanes, the presence and spatial position coordinates of marking lines, a center strip, road shoulder, and sidewalk, which determine the features of the structure and shape of the road within the monitoring range, based on image data obtained from the monitoring camera 128 and that can store such road shape data in the traffic situation monitoring device 125. The road monitoring range of the image processing ECU 126 includes one of the monitoring range of the traffic lane in the backward direction (facing the camera, normal measurement), the monitoring range of the traffic lane in the forward direction, and the monitoring range of the position where a traffic light is present.

The image processing ECU 126 measures the traffic volume and average vehicle speed in a cycle time required for the road lighting control and outputs the measurements to the road lighting control ECU 124.

Based on road traffic information data including the traffic volume and average vehicle speed obtained from the traffic situation monitoring device 125, the road lighting control ECU 124 controls at least one pole lighting device 122 in the section where the monitoring device is installed, and, when there is another section in which the traffic volume is almost the same, the road lighting control ECU 124 may control pole lighting devices 122 in the multiple sections.

The road lighting control ECU 124 computes the time to collision based on the traffic volume and average vehicle speed to determine whether a pedestrian's improper crossing is likely to occur in the situation (off-peak mode) or not (other mode) and controls the light distribution of a pole lighting device 122 based on the determination result.

The road lighting control ECU 124 measures the traffic volume (traffic density) to determine the state of traffic congestion on the road based on the traffic volume and the time zone, and sets at least two of the security mode, off-peak mode, heavy traffic mode, and traffic congestion mode to control lighting or light distribution of road lighting according to the modes.

Upon detection of a change in signal aspect, the image processing and control CPU 130 may reduce the cycle time of outputting road lighting control data.

The road lighting control ECU 124 may set the road lighting to the off-peak mode when the time to collision is within the range between a first time to collision and a second time to collision, in which the second time to collision is about twice the first time to collision and such time to collision may be changed according to the number of traffic lanes.

Each illumination mode may be determined based on the time to collision, average vehicle speed, and traffic volume (traffic density). For example, the traffic congestion mode may be set when the average vehicle speed is a predetermined value or lower and the traffic volume is a predetermined value or greater, the heavy traffic mode may be set when the average vehicle speed is the predetermined value or higher and the time to collision is shorter than or equal to the first time to collision, the off-peak mode may be set when the average vehicle speed is the predetermined value or higher and the time to collision is longer than or equal to the first time to collision and is shorter than or equal to the second time to collision, and the security mode may be set when the traffic density is a predetermined value or less.

The present invention has been described with reference to the aforementioned embodiment. However, the present invention is not limited thereto and also includes a form resulting from appropriate combination or replacement of the configurations in the embodiment. It is also to be understood that appropriate changes of the combination or the order of processes in the embodiment or various modifications, including design modifications, may be made based on the knowledge of those skilled in the art and that such changes and modifications also fall within the scope of the present invention.

[EXPLANATION OF REFERENCE NUMERALS]

| | |
|---|---|
| 10 | road lighting device |
| 12b | pole |
| 14 | illumination range |

| 16 | pedestrian |
| 18 | vehicle |
| 20 | pedestrian |
| 22 | illumination range |
| 120 | road lighting control system |
| 122 | pole lighting device |
| 124 | road lighting control ECU |
| 125 | traffic situation monitoring device |
| 126 | image processing ECU |
| 128 | monitoring camera |
| 130 | image processing and control CPU |
| 132 | communication module |
| 136 | control CPU |
| 138 | communication module |
| 140 | power supply module |
| 142 | communication module |
| 144 | control CPU |
| 150 | drive unit |
| 152 | HID ballast |
| 154, 156, 158, 160 | lamps |
| 162 | lamp unit |
| 164 | parabolic mirror |
| 166 | parabolic cylinder mirror |
| 168 | hyperbolic cylinder mirror |
| 170 | MEMS mirror |
| 172 | rotary drive unit |
| 174 | projection lens |
| 188 | focused beam optical system |
| 190 | reflecting mirror |
| 191 | light-shielding plate |
| 192 | LED light sources |
| 194 | focused beam optical system |
| 196 | reflecting mirror |
| 198 | LED light sources |
| 202 | light-shielding plate |
| 204 | diffused beam optical system |
| 206 | reflecting mirror |
| 208 | LED light source |
| 212 | light-shielding plate |
| 216 | reflecting mirror |
| 220 | light source |
| 222 | reflecting mirror |
| 224 | light source |
| 228 | LED chips |
| 230 | condenser lens |
| 234 | light source |
| 236 | sub-reflector |
| 238 | diffuser plate |

[INDUSTRIAL APPLICABILITY]

The present invention is applicable to road lighting for enabling illumination of a road and a sidewalk.

**Claims**

1.  A road lighting device capable of illuminating a road and a sidewalk, comprising
    a lamp unit of which the main optical axis is directed toward the traveling direction of a traffic lane on the road lighting device side, the lamp unit being set so that the maximum luminous intensity of emission light is obtained in the range of 10 to 30 degrees downward from the horizontal line.

2. The road lighting device of claim 1, further comprising:

   an information acquisition unit that acquires information indicating whether or not a pedestrian's improper crossing is likely to occur in the situation, which is judged on the basis of information correlated with the traffic situation around the place where the road lighting device is installed; and
   a light distribution control unit that controls light distribution of the lamp unit on the basis of information acquired by the information acquisition unit, the light distribution control unit controlling the lighting state and the illumination direction of the lamp unit.

3. The road lighting device of claim 1 or 2, wherein the lamp unit is configured to provide a trapezoidal light distribution corresponding to the road shape toward the traveling direction.

4. The road lighting device of any one of claims 1 through 3, wherein the lamp unit includes a rear visible portion that emits light toward a direction opposite to the traveling direction so that the driver of a vehicle approaching the road lighting device can visually recognize the rear visible portion.

5. The road lighting device of any one of claims 1 through 4, wherein the lamp unit is configured so that the road surface luminance is 0.5 cd/m$^2$ or greater at a position 20 meters ahead of the place where the road lighting device is installed in the traveling direction.

FIG.1A

FIG.1B

FIG.2

FIG.3

FIG.4

FIG.5A

FIG.5B

FIG.6

## FIG.7A

## FIG.7B

## FIG.7C

FIG.8

FIG.9A

FIG.9B

FIG.10A

FIG.10B

FIG.10C

FIG.11

POLE LIGHTING DEVICE ~122

POLE LIGHTING DEVICE ~122

POLE LIGHTING DEVICE ~122

FIG.12A

FIG.12B

FIG.13

```
                    ┌──────────────┐
                    │    START     │
                    └──────┬───────┘
                           │
                    ┌──────┴───────┐
                    │ ROAD SURFACE │        S10
                    │  CONDITION   │ ─────
                    │ DETERMINING  │
                    │   PROCESS    │
                    └──────┬───────┘
                           │
                    ┌──────┴───────┐
                    │ LIGHT        │        S12
                    │ DISTRIBUTION │ ─────
                    │ SETTING      │
                    │ PROCESS      │
                    │ ACCORDING TO │
                    │ ROAD SURFACE │
                    │ CONDITION    │
                    └──────┬───────┘
                           │
                    ┌──────┴───────┐
                    │ TRAFFIC      │        S14
                    │ SITUATION    │ ─────
                    │ DETERMINING  │
                    │ PROCESS      │
                    └──────┬───────┘
                           │
                    ┌──────┴───────┐
                    │ ILLUMINATION │        S16
                    │ MODE SETTING │ ─────
                    │ PROCESS      │
                    └──────┬───────┘
                           │
                    ┌──────┴───────┐
                    │ GLARE        │        S18
                    │ PREVENTION   │ ─────
                    │ CONTROL      │
                    │ PROCESS      │
                    └──────┬───────┘
                           │
                    ┌──────┴───────┐
                    │   RETURN     │
                    └──────────────┘
```

FIG.14

FIG.15

FIG.16

FIG.17A

FIG.17B

FIG.17C

FIG.18A

216

214

FIG.18B

216

214

# FIG.19

# FIG.20A

# FIG.20B

EP 2 982 901 A1

# FIG.21

## INTERNATIONAL SEARCH REPORT

| | International application No. |
|---|---|
| | PCT/JP2014/001638 |

A. CLASSIFICATION OF SUBJECT MATTER
*F21S8/08*(2006.01)i, *H05B37/02*(2006.01)i, *F21W131/103*(2006.01)n

According to International Patent Classification (IPC) or to both national classification and IPC

B. FIELDS SEARCHED

Minimum documentation searched (classification system followed by classification symbols)
F21S8/08, H05B37/02, F21W131/103

Documentation searched other than minimum documentation to the extent that such documents are included in the fields searched
Jitsuyo Shinan Koho            1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-40834 A (Iwasaki Electric Co., Ltd.), 09 February 2006 (09.02.2006), paragraphs [0013] to [0016], [0040]; fig. 1, 2 (Family: none) | 1-5 |
| Y | JP 2007-95523 A (Iwasaki Electric Co., Ltd.), 12 April 2007 (12.04.2007), paragraphs [0012] to [0016], [0025]; fig. 1, 2 (Family: none) | 1-5 |
| Y | JP 2010-52527 A (Koito Manufacturing Co., Ltd.), 11 March 2010 (11.03.2010), paragraphs [0017] to [0033]; fig. 3 (Family: none) | 1-5 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 June, 2014 (11.06.14) | 24 June, 2014 (24.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

| International application No. |
|---|
| PCT/JP2014/001638 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 3157724 U  (MIG Technology Inc.),<br>04 March 2010 (04.03.2010),<br>paragraphs [0015], [0023]; fig. 6 to 11<br>(Family: none) | 3 |
| Y | JP 2012-186000 A  (Panasonic Corp.),<br>27 September 2012 (27.09.2012),<br>paragraph [0023]<br>(Family: none) | 5 |
| A | JP 2011-222316 A  (Shinwa Excel Kabushiki<br>Kaisha),<br>04 November 2011 (04.11.2011),<br>paragraphs [0033] to [0039]; fig. 7, 8<br>(Family: none) | 1-5 |
| A | US 2011/0019405 A1  (FOXSEMICON INTEGRATED<br>TECHNOLOGY, INC.),<br>27 January 2011 (27.01.2011),<br>paragraph [0029]; fig. 4, 5<br>& CN 101963321 A | 1-5 |
| A | JP 2011-154831 A  (Panasonic Electric Works Co.,<br>Ltd.),<br>11 August 2011 (11.08.2011),<br>paragraph [0029]<br>(Family: none) | 3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2012052527 A